**Europäisches Patentamt**

**European Patent Office**

**Office européen des brevets**

(19)

(11) Veröffentlichungsnummer : **0 333 061 B1**

(12)

# EUROPÄISCHE PATENTSCHRIFT

(45) Veröffentlichungstag der Patentschrift :
**26.08.92 Patentblatt 92/35**

(51) Int. Cl.$^5$ : **B29C 53/78**, B29D 23/22, F16L 11/16

(21) Anmeldenummer : **89104277.2**

(22) Anmeldetag : **10.03.89**

(54) **Verfahren zur Herstellung eines gewickelten thermoplastischen Rohres.**

(30) Priorität : **16.03.88 DE 8803558 U**
**09.09.88 DE 3830627**

(43) Veröffentlichungstag der Anmeldung :
**20.09.89 Patentblatt 89/38**

(45) Bekanntmachung des Hinweises auf die
Patenterteilung :
**26.08.92 Patentblatt 92/35**

(84) Benannte Vertragsstaaten :
**AT BE CH DE ES FR GB GR IT LI LU NL SE**

(56) Entgegenhaltungen :
**AT-B- 309 164**
**FR-A- 1 053 799**
**US-A- 3 671 348**
**US-A- 3 917 500**
**US-A- 4 531 551**

(73) Patentinhaber : **Oy KWH Pipe AB**
**Kappelinmäentie 240**
**SF-65370 Vaasa (FI)**
Patentinhaber : **HENZE GMBH**
**Gertrudenweg 16**
**W-5210 Troisdorf (DE)**

(72) Erfinder : **Blomquist, Gunnar**
**/**
**SF-65520 Helsingby (FI)**
Erfinder : **Schröder, Günter**
**Riesebusch 14**
**W-2407 Bad Schwartau (DE)**
Erfinder : **Simons, Günter**
**Flotowstraase 12**
**WE-5210 Troisdorf (DE)**

(74) Vertreter : **Patentanwälte Dipl.-Ing. Bodo**
**Thielking Dipl.-Ing. Otto Elbertzhagen**
**Gadderbaumer Strasse 20**
**W-4800 Bielefeld 1 (DE)**

EP 0 333 061 B1

Jouve, 18, rue Saint-Denis, 75001 PARIS

## Beschreibung

Die Erfindung betrifft ein Verfahren zur Herstellung eines mehrschichtigen Rohres, mit einem Innenrohr, auf das mindestens eine Lage aus thermoplastischem Kunststoff aufgewickelt ist und ein entsprechend hergestelltes Wickelrohr gemäß den Merkmaler der Oberbegriffs des Anspruchs 8.

Es ist bekannt, mehrschichtige Wickelrohre aus thermoplastischem Kunststoff mit schraubenlinienförmig verlaufenden Lagen herzustellen. Bei einwandigen Wickelrohren werden die Lagen einander überlappend gewickelt.

Es ist auch bereits bekannt, solche Wickelrohre nicht vollständig massiv auszubilden, sondern zwischen zwei schraubenlinienförmig gewickelten ebenen Flachlagen jeweils schraubenlinienförmig verlaufende Hohlkammerprofile mit Abstand zueinander vorzusehen. Derartige Hohlkammerprofile sind im wesentlichen Rundprofile.

Weiterhin ist es bekannt (US-A-3,917,500), einschichtige Rohre aus Hohlkammerprofilen mit einem rechteckigen oder parallelogrammformigen Außenquerschnitt zu wickeln. Diese bekannten einlagigen Wickelrohre haben den Nachteil, daß sie eine in vielen Fällen unzureichende Festigkeit aufweisen.

Die bekannten mehrschichtigen Wickelrohre haben zwar den Vorteil einer höheren Festigkeit, jedoch den Nachteil, daß sie an der Außenseite nicht glatt ausgebildet sind, sondern deutlich wahrnehmbare Wulste aufweisen.

Der Erfindung liegt die Aufgabe zugrunde, ein Verfahren zum Herstellen mehrschichtiger Rohre zu schaffen, welches die Produktion sowohl auf der Innenseite als auch auf der Außenseite zumindest weitgehend glatt ausgebildeter Wickelrohre mit Hohlkammerprofilen ermöglicht.

Die Lösung dieser Aufgabe erfolgt erfindungsgemäß dadurch, daß die gewickelte Lage aus einem im Querschnitt rhombischen oder rechteckigen Hohlkammerprofil besteht, das nach Erreichen der Formstabilität auf der Innenseite und an seinen Seitenflächen plastifiziert und auf die ebenfalls plastifizierte Außenschicht eines Innenrohrs gewickelt wird, wobei die Seitenflächen benachbarter Stränge des Hohlkammerprofils miteinander verschmolzen werden.

Durch das Vorsehen von Hohlkammerprofilen erhält die Rohrwand ein sehr hohes Widerstandsmoment bei vergleichsweise geringem Gewicht. Da die Abmessungen der Hohlkammerprofile beliebig gewählt werden können, ist es möglich, vergleichsweise leichte Rohre unterschiedlicher Abmessungen für die unterschiedlichsten Anwendungsfälle zu schaffen.

Bei dem erfindungsgemäßen Verfahren entsteht ein Wickelrohr mit einer endlos um das Innenrohr umlaufenden Hohlkammer. Es wird möglich, einzelne derartige Rohre stirnseitig in der Weise miteinander zu verbinden, daß die Hohlkammer auch am Stoß der Rohre ununterbrochen fortgesetzt wird.

Bei einer bevorzugten Ausgestaltung erfolgt das Verschmelzen der plastifizierten benachbarten Seitenflächen benachbarter Wickelstränge mittels diese Seitenflächen verbindenden, zusätzlich zugeführten Kunststoffs.

Es erweist sich als zweckmäßig, daß die Plastifizierung des gewickelten Hohlkammerprofils lediglich oberflächlich erfolgt.

Nach einem weiteren Merkmal der Erfindung ist das Innenrohr ein Extrusionsrohr oder ein Wickelrohr.

Bei einer weiteren bevorzugten Ausgestaltung der Erfindung wird das Hohlkammerprofil an seiner Außenseite plastifiziert und auf die plastifizierte Schicht ein Außenrohr aufgewickelt.

Bei einer zweckmäßigen Ausgestaltung eines Verfahrens gemäß des hergestellten Wickelrohrs ist das Innenrohr zumindest innen glattwandig ausgebildet.

Dieses Innenrohr kann entweder gewickelt oder extrudiert sein.

Als besonders zweckmäßig hat es sich erwiesen, daß das Hohlkammerprofil des Wickelrohrs gefüllt ist. Als besonders zweckmäßige Füllmaterialien erweisen sich mineralische Füllstoffe wie Beton.

Die rhombische oder rechteckige Form des Hohlkammerprofils erzeugt große, einander eng benachbarte Hohlräume, die sämtlich gut mit Hilfe von Füllmaterial gefüllt werden können. Das Füllen dieser Hohlkammerprofile mit Füllmaterial stellt sicher, daß derartige Rohre bei ungünstigem Grundwasserstand nicht wieder aufschwimmen können.

Als besonders zweckmäßig erweist es sich, daß die Innenwände des Hohlkammerprofils nach innen weisende Vorsprünge aufweisen, welche von dem Füllmaterial umschlossen werden. Eine solche Ausgestaltung hat zur Folge, daß das ausgehärtete Füllmaterial fest und unverschieblich mit der Innenwand des Hohlkammerprofils verbunden ist.

Ein Wickelrohr gemäß der Erfindung ist durch die Merkmale des Anspruch 8 beschrieben.

Die Erfindung wird nachstehend anhand der Zeichnung im einzelnen erläutert. Es zeigen:

Figur 1 - einen in Längsrichtung des Rohrs gelegten Schnitt durch das Wickelrohr,

Figur 2 - einen Querschnitt durch ein spezielles Hohlkammerprofil für ein Wickelrohr.

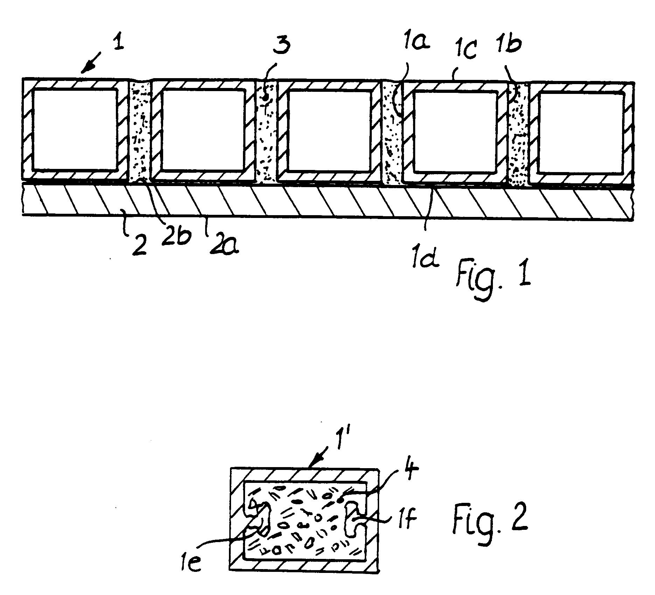

Das in Figur 1 dargestellte Wickelrohr besteht aus einem Innenrohr 2 und einem schraubenlinienförmig darauf gewickelten Strang aus einem Hohlkammerprofil 1. Das Hohlkammerprofil 1 besitzt eine am Innenrohr 2 anliegende Innenfläche 1d, eine nach außen weisende Außenfläche 1c und zwei Seitenflächen 1a und 1b. Zwischen den den nebeneinander liegenden Seitenflächen 1a und 1b benachbarten Strängen des Hohlkammerprofils 1 befindet sich zusätzlich eingebrachtes thermoplastisches Kunststoffmaterial, welches die beiden benachbarten Seitenflächen miteinander verschweißt. In verschiedenen Fällen kann auch ein Verschweißen dadurch erfolgen, daß aneinander anliegende Seitenflächen 1a und 1b benachbarter Stränge direkt miteinander verschweißt sind.

Die Herstellung des Wickelrohrs gemäß Figur 1 erfolgt in der Weise, daß die Außenseite 2b des Innenrohrs 2 oberflächlich plastifiziert wird. Auf diese oberflächlich plastifizierte Außenseite wird ein Strang des Hohlkammerprofils 1 schraubenlinienförmig aufgewickelt. Dieser Strang ist vor dem Aufwickeln an den Seitenflächen 1a und 1b sowie an der Innenseite 1d oberflächlich plastifiziert. Zwischen die benachbarten Seitenflächen 1a und 1b unterschiedlicher

Stränge des Hohlkammerprofils 1 wird während des Aufwickelvorgangs thermoplastischer Kunststoff eingebracht. Bei dem geschilderten Herstellungsverfahren erfolgt eine feste Verschweißung sowohl des schraubenlinienförmig verlaufenden Hohlkammerprofils 1 mit dem Innenrohr 2 als auch ein Verschweißen der benachbarten Stränge des Hohlkammerprofils miteinander. Es entsteht ein sowohl innen als auch außen weitgehend glatt ausgebildetes Wickelrohr.

Statt des dargestellten Rechteckprofils können auch rhombische Hohlkammerprofile verwendet werden. Statt quadratischer sind auch rechteckige Profile möglich.

Die Zeichnungsfigur 2 zeigt ein spezielles rechteckiges Hohlkammerprofil 1', das an den inneren Seitenflächen zwei in Längsrichtung sich erstreckende, annähernd T-förmige Rippen aufweist, die beim Produktionsvorgang erzeugt werden. Die Hohlkammer ist mit Füllmaterial 4 ausgefüllt. Das Füllmaterial 4, vorzugsweise Beton, ist fest mit den nach innen weisenden rippenartigen Vorsprüngen 1e und 1f verbunden.

## Patentansprüche

1. Verfahren zur Herstellung eines mehrschichtigen Rohres, mit einem Innenrohr, auf das mindestens eine Lage aus thermoplastischem Kunststoff aufgewickelt wird,
   dadurch gekennzeichnet,
   daß die gewickelte Lage aus einem im Querschnitt rhombischen oder rechteckigen Hohlkammerprofil (1; 1') besteht, das nach Erreichen der Formstabilität auf der Innenseite (1d) und an seinen Seitenflächen (1a und lb) plastifiziert und auf die ebenfalls plastifizierte Außenschicht (2b) eines Innenrohrs (2) gewickelt wird, wobei die Seitenflächen (1a und lb) benachbarter Stränge des Hohlkammerprofils (1; 1') miteinander verschmolzen werden.

2. Verfahren nach Anspruch 1,
   dadurch gekennzeichnet,
   daß mehrere Lagen von Hohlkammerprofilen (1; 1') übereinandergewickelt werden.

3. Verfahren nach Anspruch 1 oder 2,
   dadurch gekennzeichnet,
   daß das Verschmelzen der plastifizierten benachbarten Seitenflächen (1a und lb) mittels diese Seitenflächen verbindenden, zusätzlich zugeführten Kunststoffs (3) erfolgt.

4. Verfahren nach einem oder mehreren der Ansprüche 1 bis 3,
   dadurch gekennzeichnet,
   daß die Plastifizierung des gewickelten Hohlkammerprofils (1; 1') lediglich oberflächlich erfolgt.

5. Verfahren nach einem oder mehreren der Ansprüche 1 bis 4,
   dadurch gekennzeichnet,
   daß das Innenrohr (2) ein Extrusionsrohr ist.

6. Verfahren nach einem oder mehreren der Ansprüche 1 bis 5,
   dadurch gekennzeichnet,
   daß das Innenrohr (2) ein Wickelrohr ist.

7. Verfahren nach einem oder mehreren der Ansprüche 1 bis 6,

dadurch gekennzeichnet,
daß das Hohlkammerprofil (1; 1') an seiner Außenseite (1c) plastifiziert und auf die plastifizierte Schicht ein Außenrohr aufgewickelt wird.

8. Wickelrohr, bestehend aus einem Innenrohr aus thermoplastischem Kunststoff, auf das mindestens eine Lage aus thermoplastischem Kunststoff aufgewickelt ist, hergestellt nach einem oder mehreren der Ansprüche 1 bis 7,
dadurch gekennzeichnet,
daß das Innenrohr (2) zumindest innen glattwandig ausgebildet ist und daß die gewickelte Lage aus einem im Querschnitt rhombischen oder rechteckigen Hohlkammerprofil (1; 1') besteht, das mit der Außenschicht (2b) des Innenrohrs (2) verschmolzen ist, wobei die Seitenflächen (1a u. 1b) benachbarter Stränge des Hohlkammerprofils (1; 1') miteinander verschmolzen sind.

9. Wickelrohr nach Anspruch 8,
dadurch gekennzeichnet,
daß das Innenrohr (2) gewickelt ist.

10. Wickelrohr nach Anspruch 8,
dadurch gekennzeichnet,
daß das Innenrohr (2) extrudiert ist.

11. Wickelrohr nach einem oder mehreren der Ansprüche 8 bis 10,
dadurch gekennzeichnet,
daß das Hohlkammerprofil (1; 1') der gewickelten Lage gefüllt ist.

12. Wickelrohr nach Anspruch 11,
dadurch gekennzeichnet,
daß das Füllmaterial (4) mineralisch ist.

13. Wickelrohr nach Anspruch 12,
dadurch gekennzeichnet,
daß das mineralische Füllmaterial (4) Beton ist.

14. Wickelrohr nach einem oder mehreren der Ansprüche 8 bis 13,
dadurch gekennzeichnet,
daß die Innenwände des Hohlkammerprofils (1') nach innen weisende Vorsprünge (1e; 1f) aufweisen, welche von dem Füllmaterial (4) umschlossen werden.

15. Wickelrohr nach einem oder mehreren der Ansprüche 8 bis 14,
dadurch gekennzeichnet,
daß die Außen- und/oder Innenflächen des Hohlkammerprofils (1; 1') eine im Koextrusionsverfahren hergestellte rauhe Oberfläche haben.

16. Wickelrohr nach einem oder mehreren der Ansprüche 8 bis 15,
dadurch gekennzeichnet,
daß das Hohlkammerprofil aus einem koextrudierten Mehrschichtrohr besteht, dessen Innen- und Außenwand glatt und dessen Zwischenraum ausgeschäumt ist.

## Claims

1. Method for producing a multi-layered pipe, with an inner tube onto which is wound at least one layer of thermoplastics,
characterised in that the wound layer consists of a hollow chamber profiled section (1;1') of rhomboid or rectangular cross-section which after reaching the dimensional stability is plasticized on the inside (1d) and on the side faces (1a and 1b) and is wound on the likewise plasticized outside layer (2b) of an inner tube (2) wherein the side faces (1a and 1b) of adjoining strands of the hollow chamber section (1;1') are fused together.

2. Method according to claim 1
characterised in that several layers of hollow chamber sections (1;1') are wound one on top of the other.

3. Method according to claim 1 or 2
characterised in that fusing the plasticized adjoining side faces (1a and 1b) is carried out by means of an additionally supplied plastics (3) which connects these side faces together.

4. Method according to one or more of claims 1 to 3
characterised in that plasticizing the wound hollow chamber sections (1;1') is undertaken only on the surface.

5. Process according to one or more of claims 1 to 4
characterised in that the inner tube (2) is an extrusion pipe.

6. Method according to one or more of claims 1 to 5
characterised in that the inner tube (2) is a wound pipe.

7. Method according to one or more of claims 1 to 6
characterised in that the hollow chamber section (1;1') is plasticized on its outer side (1c) and an outer tube is wound onto the plasticized layer.

8. Wound pipe, comprising an inner tube of thermoplastics on which is wound at least one layer of thermoplastics, manufactured according to one or more of claims 1 to 7
characterised in that the inner tube (2) is smooth-walled at least on the inside and that the wound layer consists of a hollow chamber section (1;1') of rectangular or rhomboid cross-section which is fused with the outer layer (2b) of the inner tube (2) wherein the side faces (1a and 1b) of adjoining strands of the hollow chamber section (1;1') are fused together.

9. Wound pipe according to claim 8
characterised in that the inner tube (2) is wound.

10. Wound pipe according to claim 8
characterised in that the inner tube (2) is extruded.

11. Wound pipe according to one or more of claims 8 to 10
characterised in that the hollow chamber section (1;1') of the wound layer is filled.

12. Wound pipe according to claim 11
characterised in that the filling material (4) is mineral.

13. Wound pipe according to claim 12
characterised in that the mineral filling material (4) is concrete.

14. Wound pipe according to one or more of claims 8 to 13
characterised in that the inside walls of the hollow chamber section (1') have inwardly pointing projections (1e;1f) which are enclosed by the filling material (4).

15. Wound pipe according to one or more of claims 8 to 14
characterised in that the outside and/or inside faces of the hollow chamber section (1;1') have a rough surface produced in the co-extrusion process.

16. Wound pipe according to one or more of claims 8 to 15
characterised in that the hollow chamber section consists of a co-extruded multi-layer pipe whose inside and outside walls are smooth and whose interspace is foamed.

## Revendications

1. Procédé de fabrication de tube par enroulement, avec un tube intérieur sur lequel au moins une couche de matière synthétique thermoplastique est enroulée,

caractérisé par le fait
que la couche enroulée consiste en un profilé creux de section transversale quadrangulaire (1; 1′), dont la surface interne (1d) et les surfaces latérales (1a et 1b) sont plastifiées après obtention de la stabilité de forme, et qui est enroulé sur la couche externe (2b), également plastifiée, d'un tube intérieur (2), les surfaces latéralrd (1a et 1b) de tronçons voisins les uns des autres du profilé creux (1; 1′) étant fondus ensemble.

2. Procédé selon revendication 1,
caractérisé par le fait
que plusieurs couches de profilés creux (1; 1′) sont enroulées les unes sur les autres.

3. Procédé selon revendication 1 ou 2,
caractérisé par le fait
que la soudure des surfaces latérales voisines, plastifiées (1a et 1b) se fait à l'aide d'un apport dematière plastique supplémentaire (3), qui relie ces surfaces.

4. Procédé selon l'une ou plusieurs des revendications 1 à 3,
caractérisé par le fait
que la plastification du profilé creux enroulé (1; 1′) est seulement superficielle.

5. Procédé selon l'une ou plusieurs des revendications 1 à 4,
caractérisé par le fait
que le tube intérieur (2) est un tube extrudé.

6. Procédé selon l'une ou plusieurs des revendications 1 à 5,
caractérisé par le fait
que le tube intérieur (2) est un tube enroulé.

7. Procédé selon l'une ou plusieurs des revendications 1 à 6,
caractérisé par le fait
que le profilé creux (1; 1′) est plastifié sur sa surface externe (1c) et qu'un tube extérieur est enroulé sur la couche plastifiée.

8. Tube enroulé, composé d'un tube intérieur en matière synthétique thermoplastique, sur lequel au moins une couche de matière synthétique thermoplastique est enroulée, lequel est fabriqué selon l'une ou plusieurs des revendications 1 à 7,
caractérisé par le fait
que le tube intérieur (2) présente des parois lisses au moins à l'intérieur et
que la couche enroulée consiste en profilé creux (1; 1′) de section transversale en forme de losange ou quadragulaire, fondue avec la couche externe (2b) du tube intérieur (2), les surfaces latérales (1a et 1b) de tronçons du profilé creux (1; 1′) voisins étant fondues ensemble.

9. Tube enroulé selon revendication 8,
caractérisé par le fait
que le tube intérieur (2) est enroulé.

10. Tube enroulé selon revendication 8,
caractérisé par le fait
que le tube intérieur (2) est extrudé.

11. Tube enroulé selon l'une ou plusieurs des revendications 8 à 10,
caractérisé par le fait
le profilé creux (1; 1′) de la couche d'enroulement est remplie.

12. Tube enroulé selon revendication 11,
caractérisé par le fait
que la matière de remplissage (4) est d'origine minérale.

13. Tube enroulé selon revendication 12,
caractérisé par le fait

que la matière de remplissage minérale (4) est du béton.

14. Tube enroulé selon l'une ou plusieurs des revendications 8 à 13,
caractérisé par le fait
que les parois internes du profilé creux (1′) présentent des saillies (1e; 1f) dirigées vers l'intérieur et cernées par la matière de remplissage (4).

15. Tube enroulé selon l'une ou plusieurs des revendications 8 à 14,
caractérisé par le fait
que les surfaces externes et/ou internes du profilé creux (1; 1′) sont rugueuses, les aspérités résultant d'un procédé de co-extrusion.

16. Tube enroulé selon l'une ou plusieurs des revendications 8 à 15,
caractérisé par le fait
que le profilé creux consiste en un tube a plusieurs couches co-extrudé, dont la paroi intérieur et extérieure est lisse et dont l'intervalle est moussé.

Fig. 1

Fig. 2